(19) Europäisches Patentamt
European Patent Office
Office européen des brevets

(11) **EP 4 557 175 A1**

(12) **EUROPEAN PATENT APPLICATION**

(43) Date of publication:
**21.05.2025 Bulletin 2025/21**

(21) Application number: **23209886.3**

(22) Date of filing: **14.11.2023**

(51) International Patent Classification (IPC):
**G06N 3/08** (2023.01)  **G01S 17/931** (2020.01)

(52) Cooperative Patent Classification (CPC):
**G06N 3/08; B60Q 9/00; G06N 3/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Sensor-Technik Wiedemann GmbH
87600 Kaufbeuren (DE)**

(72) Inventors:
• **LEE, Changjoo
  87600 Kaufbeuren (DE)**
• **Dr. SCHÄTZLE, Simon
  87600 Kaufbeuren (DE)**

(74) Representative: **Pfenning, Meinig & Partner mbB
Patent- und Rechtsanwälte
Joachimsthaler Straße 10-12
10719 Berlin (DE)**

(54) **METHOD FOR TRAINING AND USING A NEURAL NETWORK FOR ESTIMATING A CONFIDENCE LEVEL OF SENSOR MEASUREMENTS**

(57) The invention refers to a method for training and use of a neural network (1) to assess the quality of measurement data (3b) delivered by a sensor (5), wherein the method for training comprises the following steps: providing an original measurement data set (3a), analyzing the original measurement data set or features extracted from the original measurement data set by an analyzing unit and/or an analyzing procedure (6) to generate an analyzing performance,
-transforming the original measurement data set into one or more transformed data sets (4a, 4b, 4c, 4d, 4e) of different quality levels,
-training the neural network by feeding transformed data sets and/or the features extracted from each transformed data sets by an extraction unit (30) on one hand, and for each transformed data set an assigned analyzing performance value on the other hand into the neural network.

The invention further refers to a system and a machine with a trained neural network and to a method for operating a system.

Fig. 3

**Description**

The invention is in the field of sensor technology and in particular related to a measurement system with one or more sensors. Measurement systems can for example be designed as perception systems. Perception systems comprise perception sensors and perception methods that gather and process information about external conditions, for example parameter values or other pieces of information in the environment of the sensor or sensors.

The sensors used in perception systems can include a great variety of sensors like, e.g. optical sensors as cameras, LiDAR, RADAR, and other imaging technologies. A perception system may, however also comprise or consist of other types of sensors like acoustic sensors. In principle, all kinds of sensors can be involved in a perception system.

The sensors of a system usually gather data and information about the surrounding environment. Sensor data may, for example, be processed by perception methods to identify and categorize objects, people, or other entities in the environment. Perception systems are used across a wide range of automated machines, such as self-driving cars, automated mobile machines, robotics, and surveillance systems.

Realizing a safe, and reliable perception system presents major challenges. Perception sensors often do not work perfectly in all situations, which means that perception systems always carry the risk of failing perceptions for the following reasons:

(a) Problems with a sensor: Perception systems rely on perception sensors to collect data about the environment. If the sensors are partially damaged or dirty, they may not be able to collect accurate data, which can result in incorrect perception.

(b) Problems with difficult external measurement conditions: Perception systems can struggle to perceive the environment in low-light conditions or during adverse weather such as heavy rain, snow, or fog. This can make it difficult for the sensors to gather enough or the correct information, for example to detect objects.

In the prior art, methods have been discussed to achieve a higher reliability of perception systems. For example, the US patent document US2022/0114805 A1 describes an automated driving perception system which makes use of a trained multimodal perception method. The training is improved by generating, based on raw sensor data, augmented data by injecting noise, occlusions and misalignments. This way, the system shall be enabled to improve object detection, classification, tracking and sensor fusion.

Taking into consideration the prior art, it is one goal of the current invention to improve the reliability of a perception system.

For achieving this goal, the invention is relating to a method for training a neural network, a data storage device, a neural network, a method for operating a system with a neural network, a system with a neural network and a machine. In one implementation, the invention relates to a method for training a neural network to assess the quality of measurement data delivered by a sensor, wherein the method comprises the following steps:

providing an original measurement data set,

analyzing the original measurement data set or features extracted from the original measurement data set by an analyzing unit and/or an analyzing procedure to generate an analyzing performance,

- providing one or more transformed data sets by providing additional measurement data sets of different quality levels, that are used as transformed data sets and/or

- transforming the original measurement data set and/or additional measurement data sets into one or more transformed data sets of different quality levels,

analyzing at least one of the transformed data sets and/or features extracted from each transformed data set by the analyzing unit and/or the analyzing procedure to generate an analyzing performance and comparing the analyzing performance of the transformed data sets and/or features extracted from each transformed data sets with the analyzing performance of the original measurement data set or the analyzing performance of the features extracted from the original measurement data set to assign, based on the results of the comparison, analyzing performance values to the transformed data sets,

- training the neural network by feeding transformed data sets and/or the features extracted from each transformed data sets by an extraction unit or an extraction process on one hand, and for each transformed data set the assigned analyzing performance value on the other hand into the neural network.

The trained neural network may in some cases be a convolutional neural network. This type of neural networks is particularly appropriate for the analysis of image data, including feature extraction and classification of image content. Further details and advantages of convolutional networks are described below.

The original measurement data set can be provided by taking measurements by the sensor that delivers the measurement data the quality of which shall be assessed. The original measurement data set can also be a data set measured by a sensor of the same type or kind, for example, a color or black and white photographic sensor, an infrared photographic sensor or a microphone. The original measurement data set can also be a data set provided from another source like the internet or a data base. The original measurement data set should comprise as much information as possible reflecting data that have been recorded or measured. For example, if the sensor is a photographic sensor, the original measurement data set should be a photo taken with optimal weather conditions. By analyzing an original measurement data set and generating, based on these data, an analyzing performance, an analyzed data set and hence a reference analyzing performance is generated which can be measured by assigning to this performance a reference performance value.

Transformed data set may in some cases be generated by a digital or electronic or analogue electronic degradation process. This procedure allows for production of a huge number and variety of transformed data sets, for example more than 1000 or more than 10000 data sets, in a short time. On the other hand, transformed data sets may also be generated by providing additional measurement data sets of different quality levels. These additional measurement data sets may be data sets that have been measured under bad measurement conditions. In the case of image data, the additional measurement data may be pictures taken at bad, foggy or rainy weather or under low light conditions. Further, additional measurement data may be generated using purposely worsened device settings or device settings that are changed randomly. In case the additional measurement data are image data, they can for example be generated by taking photos by a camera choosing randomly changed/varied focus length of the lens, exposure time, aperture, sensitivity or other settings or by manipulating the quality of the images by applying water or dirt on the lens, moving objects in front of the lens, applying different lighting or moving the camera during exposures.

The transformed data sets may also be a mixture of digitally/electronically degraded data sets and data sets that are generated based on additional measurement data sets.

The analyzing procedure may in some cases for example comprise the detection and/or identification and/or classification of patterns in the original measurement data set, which may, e.g. be an optical image, but may as well be a set of acoustic data like a spectrum. Correspondingly, the analyzing procedure may be a detection of patterns in a data set representing for example an image or an acoustic spectrum. The patterns that can be detected may be linked to real world objects like vehicles, persons or other objects or they may be defined in an abstract way as defined features of an image or spectrum or generally features of a data set. Further, analyzing may, in the case of object detection, comprise to assign positions to the detected items in the environment of the sensors. The analyzing procedure may not only be applied to measurement data but also to features which have been extracted from measurement data by an extraction unit. Such features may for example be lines or edges detected in an image, shape features like angles, triangles, curves, circles or color features like the distribution of colors, predominance of certain colors or clarity values, contrast values, contrast distribution. The extracted features may be, in the case of image data, a sketch of the original image or a black and white version or any other kind of a version with reduced data volume. But the extraction is not limited to the reduction of data and features that can be recognized by humans. The extracted features can in many cases be abstract like, in the case of image data or acoustical data, the distribution of intensities or a spectrum. Before the analyzing procedure which determines an analyzing performance value of a data set, it may be particularly appropriate to choose a kind of feature extraction which, among others or predominantly extracts such kinds of features from the data set, which are present or reflected in more than one part of the data set or even across the whole data set. This kind of features might be called "global" features. For example, for image data, one potential global feature might be the contrast of the image or the brightness or graphical noise or the non-existence of straight lines or edges.

Such a feature extraction of global features could be chosen for analyzing image data by the trained neural network during its application after training, but it could also be chosen for a feature extraction, which is performed before providing extracted features as training data to the neural network. Therefore, a potential feature extraction which is performed before analyzing the data sets may be the same type of feature extraction, which may potentially be performed before providing the extracted features to the neural network for the training, or the two types of feature extraction may also be different from each other.

A process step of extracting features from the original measurement data set and from the transformed data sets for the purpose to provide training data may be included in the analysis step or it may be performed before the step of analyzing the data for assigning analysis performance values for the training purposes. The feature extraction and the analysis may each be performed by a separate pre-trained neural network or they may be performed by one and the same neural network which can be a convolutional neural network. The feature extraction which is performed to provide extracted features from the data sets to the neural network may also be implemented as a neural network or part of a neural network.

The analyzing procedure may comprise the recognition of patterns in the data sets or in the features, which have been extracted from the data sets. The analyzing unit or procedure may look in one case for predetermined patterns and count the number of one or more predetermined patterns that have been detected. In another case, the analyzing unit may also detect new patterns and compare them with patterns that have been found in other data sets. In the first case, the similarity of two data sets or features extracted from them, for example the original measurement data set and a transformed data set, and hence the quality or analyzing performance of a transformed data set, may be determined based on the type or number of corresponding patterns detected in the data sets which are compared. In the second case, the similarity of patterns which have been detected in two data sets or in features extracted from them may be determined based on well-known algorithms or on pre-trained neural networks. The similarity metrics that is applied depends on the type of patterns that is compared for the different data sets.

For example, if edges identified in two images are compared, their length, position and orientation may be measured and compared. If colors or color distributions in an image are compared, their distance in an RGB color space may be measured. This distance may be determined for a number of areas in the image. In the same way, the brightness values for pixels or sub-areas of two images may be compared to determine a similarity. Further, extracted features could also include the contrast or average contrast, brightness or average brightness of an image or parts of an image. These values may be measured or determined and the measured or determined values may be compared to assess the similarity of the features for two data sets, for example an original measurement data set and a transformed data set. On the basis of this kind of similarity, a quality or analyzing performance value of a data set may be determined.

For sound data, to measure a similarity of two acoustic events, for example the spectra or one or more sections of spectra may be compared or sound pressure curves for one or more frequencies or frequency bands may be compared.

The same types of features as described above as being extracted before the analyzing process or in the course of the analyzing process may also be extracted from the data sets in order to provide the extracted features as training data directly to the neural network, which shall be trained.

The result of the analyzing procedure, i.e. the analyzing performance based on transformed, lower quality data sets (data sets with a lower analyzing performance value or with less similarity to the original measurement data) or on features extracted from these lower quality data sets is determined by comparison with the reference analyzing performance of the original measurement data set or features extracted from it, and an analyzing performance value is assigned to the analyzing results that are based on the transformed data sets.

The neural network then is taught or trained which level of quality, represented by an analyzing performance value, each single transformed data set has compared to the reference performance value. For this purpose, the neural network is trained with the transformed measurement data sets and potentially also of the original measurement data set and/or features extracted from these data sets on one hand and on the other hand with the analyzing performance value of each of the transformed measurement data sets and potentially also of the original measurement data set. Examples for features that may be extracted for the analysis have been described above. Further features that can be extracted from the data sets and used for the analysis and for the training of the neural network may be for example subsets or a selection of the data of the measurement data sets and the transformed data sets like image data projected on channels of an RGB plane in the case of imaging data and in the case of acoustic data certain filtered spectra or a sound pressure or a function representing the changes of sound pressure or a sound intensity in a certain frequency over time. The trained neural network, after the training, is enabled to assign a performance value to each future real measurement data set that is captured by the sensor or to respective features that have been extracted from such captured measurement data sets.

It is a special and advantageous feature of one potential implementation of the invention that the assignment of a performance value and hence, the quality assessments of the original measurement data set and transformed measurement data sets are each based on analyzing procedure results. By this structure, the quality assessment has at least one focus on the aspects and properties of the data sets, which have an importance for the used analyzing procedure or analyzing unit. The analyzing procedure for the training process of the neural network may be appropriately selected depending on the purpose for which the data measured by the sensor are used.

It is one further advantage of the current invention that the assessment of quality of the measurement data during the training process as well as during the application and use of the neural network can be made independently of the way in which the measured data are used. Hence, appropriate features may be selected for extraction and further analysis of the quality of measurement data independent of the selection of features, which might be extracted from the measurement data for further use.

The analyzing procedure used for preparing training data, for example a pattern recognition, may be the same analyzing procedure or a similar analyzing procedure to the one, that is later, during use of the neural network, implemented to process and use the measurement data of the sensor that is actually used. In this case, the focus of the training of the neural network is on the kind of quality that is delivered by the sensor in combination with the analyzing of the data by the same analyzing procedure or analyzing unit.

In many cases however, the analyzing procedure used for preparing training data may be different from the analyzing procedure, which is later during the use of the trained network performed for the further use of the measurement data.

The invention may further provide that the transformation of the original measurement data set into transformed data sets comprises one or more of

adding noise,

filtering data,

blurring data

masking

partially randomizing data

distorting data.

The transformation of the original measurement data set therefore may cause a change of the data, which is not reproducible and not reversible by the analyzing procedure and therefore, cannot be compensated. In the course of the transformation, information about the original measurement data set, for example the environment of the sensor or sensors, which was comprised or represented by the original measurement data set, is lost at least partially. This process can be described by a loss of quality of the data. The transformation can take place in several steps generating by a digital process or an electronic/analog electronic process or any other data degrading process transformed data sets of different quality levels, i.e. data sets which comprise less and less of the original information about the original data, e.g., the environment of the sensor or sensors. The analyzing procedure usually generates less useful results from data sets with a lower quality. This fact allows for taking the result of the analyzing procedure as an indicator of the quality of the original measurement data set as well as of the transformed data sets.

In order to measure the quality of the data, a quality value can be assigned to the results of the analyzing procedure.

The different kinds of data transformation or data deterioration listed above can be implemented by electronic, in particular digital processes in order to be controllable and reproducible. This way, in short time a big number of transformed data sets may be generated which is useful for the training process of a neural network. Some of the transformation mechanisms may simulate special environmental conditions. In the case that the sensors comprise imaging sensors, this may comprise low light conditions, a strong light beam hitting a sensor, rain, fog, raindrops on the surface of a sensor or full or partial occlusion of a sensor surface. In the case of acoustic data, the transformation may simulate noise, filtering of frequency bands or background sounds.

Further, a method may provide, that the transformed data sets are one or more of

resized,

normalized and

augmented.

These steps may be performed before the analyzing step of the data sets, before the extraction of features from the data sets by an extracting unit or process and before using the data for the training of the neural network. Resizing the data sets involves changing the size of the input data to a fixed size for computational efficiency or to ensure compatibility with the input size requirements for the analyzing procedure and/or the training of the network. Data normalization relates to scaling the input data to a common scale or range of values. This is done to make the input data more comparable and to ensure that the model or neural network can learn from the data effectively.

The data augmentation comprises the change of content of the original measurement data, loss of information, which was comprised in the original measurement data and partially the creation and addition of new information which is only partially or not at all linked to the information which was comprised in the original measurement data.

Finally, the analyzed dataset may be converted to a standardized format, e.g. a multi-channel image format, in the case of imaging data e.g. an RGB image format, where each channel is assigned useful information such as color, intensity, reflectivity, location, temperature, etc. For example, if a multi-dimensional point cloud is used as input, each 3-D or N- D point can be projected onto a 2D plane defined by the grid or generally speaking to a lower dimensional entity and pixel values can be assigned based on the local intensity.

These so converted or transformed data sets and/or features that have been extracted from the transformed data sets are used as training data sets for the training of the neural network or, in other words, for the safety model training. Extracted features may for example be certain patterns extracted from the transformed data sets, like, e.g. areas of high contrast, brightness or special colors or other qualities.

It may also be provided that analyzing a data set or features extracted from a data set comprises determining the similarity of the data set or features extracted from the data set with the original measurement data set or features extracted from the original measurement data set, in particular identifying predefined patterns in the data set or in features extracted from the data set and comparing them with predefined patterns identified in the original measurement data set or in the features extracted from the original measurement data set.

Therein, the determination of the similarity of two data sets or features extracted from different data sets may include well defined metrics which have been defined in a deterministic way or algorithms that have been trained or are available as pre-trained modules, for example neural networks. Potential metrics for similarity have already been discussed above.

Analyzing a data set generally may refer to analyzing generally a measurement data set or the original measurement data set or a transformed data set. For example, if the measurement data set is a set of imaging data from one or more sensors, recognizing patterns may include detecting/recognizing/identifying persons, objects, vehicles, numbers, letters, graphical icons, color spots of defined colors, intensive light spots, edges or peaks or other items which are part of the optical data measured by at least one of the optical sensors. Analyzing data sets may also refer to detecting predefined or not predefined classes of features in the data sets.

In the case of other sensors than imaging sensors, e.g. acoustic sensors, it may include recognizing specific noise or specific sounds or specific acoustic patterns which may indicate specific elements like a vehicle passing by or a damage of a motor running in the vicinity of a microphone which is acting as an acoustic sensor. One implementation may also provide, that the analyzing performance value of a transformed data set is measured as a similarity of patterns that are identified by the analyzing unit or the analyzing procedure in the transformed data set or in the features extracted from each transformed data set on one hand and patterns identified in the original measurement data set or in features extracted from the original measurement data set on the other hand, or that the analyzing performance value of a transformed data set is measured as a number of predefined patterns that are identified by the analyzing unit or the analyzing procedure in the transformed data set or in the features extracted from each transformed data set as a share of the predefined patterns that are identified by the analyzing unit or the analyzing procedure in the original measurement data set or in the features extracted from the original measurement data set.

Such a share of detected predefined patterns may refer to the number of patterns in one or more determined and/or predefined class(es) of patterns. The measurement of similarity of two patterns and possible metrics for the similarity have been explained above for a variety of potential patterns and features.

In the case of a system with imaging sensors, the analyzing procedure for training data may comprise detecting and in some cases, identifying a person or an object in the data sets. The analyzing may also include to localize the detected items and classifying them depending on the position where they have been detected. Some positions or certain parts of the space which is supervised by the sensors and is included in the image data may be specially classified, so that an item, which is localized in a classified place is assigned a special class or safety value. Therefore, certain areas of the images and corresponding subsets of the image data may be excluded from the analyzing procedure or included with higher or lower weight or the analyzing procedure may be restricted to certain areas

For example, if items are detected in a special radius around a sensor or in a particular section of the environment and hence, in a particular section of the image of the environment, they (or the overall situation) may be classified as dangerous.

It may therefore further be provided, that a subset of the original measurement data set is selected for the training of the neural network or a subset is given a higher weight than the rest of the original measurement data set for the training of the neural network.

This measure may be taken, as explained above, if not all of the original measurement data are important for the surveillance or analysis during a later application of the trained network or some parts or sections of the training data are more important than others. In the case of imaging data, the subset of data may for example be related to certain directions relative to the sensors or certain sections of the images or of the environment of the sensors. A subset of the original measurement data set may also be reduced to features extracted from the original measurement data set, like, in the case of photographic data, a black and white image or an image with only reduced or selected colors where the original was a color image, or a reduction of an image to only edges of objects, or the reduction to a sketch showing the lines of highest contrast in the image or showing lines of a contrast above a certain value or a reduction to black and white without grey regions, that is, a contrast image with only white and black parts, wherein the white parts are those regions of the image where the brightness is above a defined level.

It may, for example, be provided that the subsets of imaging data which are provided for the training to the neural network or from which features are extracted to provide them for training to the neural network, is identical or not identical to or only overlapping with the subsets of image data that are analyzed in the analyzing procedure or from which features are extracted for performing the analyzing procedure to determine analyzing performance values. In the case of acoustic sensors, a subset of data provided to the neural network for training may for example be related to a certain part of the acoustic spectrum or sound volume or certain sound patterns over time, while the subset used for the determination of a quality may be different To elaborate further on this example, the whole spectrum may be provided to the neural network, but for the determination of the quality, the noise could be used and only the noise in a limited part of the spectrum could be extracted as a feature and further be analyzed.

In some cases, a subset of a data set may also be a set of features that have been extracted from the data set.

A further implementation of the invention relates to a data storage device comprising a plurality of stored instructions that, when executed on a processor circuitry of a computer controlled device, cause the computer controlled device to perform a method according to the description above.

In this case, the computer-controlled device may perform itself or control the original measurement by the sensors as well as the multiple transformation of the original measurement data sets into transformed data sets and the analyzing of the original measurement data sets and the transformed data sets. Further, the computer-controlled device may perform itself or control the assignment of performance values to the data sets and the device may send the data sets as well as the performance values to the neural network to train it as described above.

The invention my further relate to a neural network, in particular a convolutional neural network, which has been trained according to a method of a kind described above. The neural network may implement an architecture of a convolutional neural network (CNN) for classification. This can include several layers such as Convolutional layers, pooling layers, in particular Max-Pooling layers, Dropout layers, and fully connected layers. The number of layers, filters, and neurons can vary depending on the size and complexity of the input data. The network may comprise more than two or more than 4 groups of convolutional layers and MaxPooling layers between the groups to form a deep convolutional network which allows for a highly complex analysis. The CNN is trained using the training dataset. During training, the weights of the CNN are adjusted iteratively with the original data set and the transformed data sets on one hand and with the performance values on the other hand to minimize the loss function between the predicted output (performance value) and the actual output of the network, when the input is one of the transformed data sets.

The feature extraction and the analysis procedure of data sets may both be performed by the same CNN. CNNs have the special advantage that they allow for a reliable and efficient feature extraction on one hand and that they are appropriate for a categorization of features or patterns on the other hand. Further, by the insertion of MaxPool layers, the volume of data that are handled by the network can be reduced which provides for a high efficiency and capability of fast analysis of data. Fully connected layers are appropriate for an efficient classification of identified patterns.

Further, CNNs generally have the advantage to be very efficient in image analysis and classification. The proposed CNN can easily be designed to guarantee translational and rotational invariance.

Further, the invention relates to a method for operating a system with at least one sensor and a neural network, which has been trained by a process as described above,

wherein the or each sensor takes measurements to generate measurement data,

the measurement data of the or each sensor are sent to the neural network which assigns an analyzing performance value to the measurement data and wherein

for the measurement data of the or each sensor the assigned analyzing performance value is compared to one or more predefined performance value classes and, based on the comparison, a sensor confidence level is assigned to each sensor and/or to a group of sensors.

The system by this procedure will produce a confidence level for sensor data after a measurement. The confidence level comprises the information if or to what extent the measurement result is reliable. The output of the system may be an alarm, for example an acoustical or optical alarm or a trigger signal, for example a digital or electrical trigger signal, if the sensor and/or measurement is not reliable. The alarm or trigger signal may be sent to an electrical circuitry, which initiates, blocks or modifies additional steps. The output of the system may also be a signal, which causes the sensor to repeat the last measurement or replace the last measurement data by other data or a signal which causes to replace the sensor by another sensor or replace the measurement data by measurement data of another sensor which has performed a measurement at the same time. Thereby, redundant or complimenting sensors may be controlled by the system.

The alarm or trigger signal may also comprise a signal, which initiates a safety routine for checking all available sensors and/or their measurement results or for cleaning or modifying the sensors. In this case, for checking the measurement results of the sensors, current or past measurement results of the sensors may be analyzed or analyzed again by the neural network. In any account, the further data processing of the measurement data may depend on the confidence level that is assigned to the measurement data by the neural network.

A further implementation may relate to a method for operating a system as described above, wherein the measurement data that have been generated by measurements taken by the sensor or sensors, apart from the assignment of a sensor confidence level, are further processed by a data processing which is identical or not identical to the analyzing procedure, that was applied during the training of the neural network for the transformed data sets and the original measurement data set and/or features extracted from the data sets.

If the measurement data that are generated by measurements taken by the sensor or sensors during operation of the system are further processed by a data processing which is identical or to some extend similar to the analyzing procedure, that was applied during the training of the neural network, it is evident that the definition of the performance value which has been used for training the neural network and after the training determines the outcome of the analysis of any data set by the trained network, is appropriate for providing information about the usability and reliability of the analyzed data set for the further processing, since training data and measurement data during application are analyzed with the same or a similar focus.

In some cases, however, it may be useful to apply for the analyzing procedure, that is applied during the training of the neural network a kind of procedure, which is different from the further processing of the measurement data during application of the trained neural network. It should also be clear that the further processing of the measurement data during application may be based on features that are extracted from the measurement data and that are different from features that are extracted for determining the quality/analyzing performance value of measurement data sets.

A further implementation may relate to a method which provides that a subset of the measurement data set is selected or a subset is given a higher weight than the rest of the measurement data set for the assignment of a safety value by the neural network.

A subset of measurement data may mean for example a selection of data, which is part of the measurement data or features extracted from the measurement data.

This aspect may or may not be combined with a training mode of the neural network in which a subset or extracted features of the original measurement data set and corresponding subsets or extracted features of the transformed data sets are used for the training. In the case of combining training with a subset of data sets or extracted features on one hand and selection of a subset or extracted features of a measurement data set which is measured during application of the trained neural network on the other hand, the same subset of data may be selected during application as was used for the training. In this context, a subset of data may also mean features extracted from the data.

In any account, by this measure, the effort of the neural network may be reduced, the assignment of confidence levels may be more sensitive in selected areas and the system is less prone to errors, which could be generated by the part of the measurement data, which is not part of the selected subset.

A further implementation of the method may provide, that the measurement data of at least one sensor are only provided for further use or data processing, if the sensor confidence level of the sensor is above a predefined safety threshold.

It is one aspect of the invention that during use of the system comprising the trained neural network, it is not only secured that the system performs its function and, e.g. supervises the environment of the sensors by a data processing, but also meta-data are produced by the neural network which reflect the reliability or confidence level of the measured data and also in some cases, of the sensors. Based on the confidence level, the further use of the measurement data in the form of any data processing of the measurement data by a data processing unit may be stopped or blocked, prevented or modified to avoid errors and reduce the risk of malfunctions. In some cases, instead of or in addition to blocking a function, it may also be provided, that a trigger signal is generated for starting a process or an action.

The method may further provide, that, if the sensor confidence level of one sensor or measurement data provided by the sensor is below a predefined threshold, the measurement data of the sensor are replaced by measurement data of at least one other, redundant sensor of the same kind or of a different kind. This redundancy control function has already been explained in detail above. The replacement measurement data can then be further processed by a data processing unit.

A further implementation of the method may provide, that assigned sensor confidence levels of two or more sensors are combined to generate a system safety value.

The system safety value can be generated based on the confidence level of just one sensor or more than one sensor. Therein, the system safety level can be generated by predefined rules. For example, the system safety level may be "unsafe", if the confidence level of one certain sensor or the confidence level of any sensor or the confidence level of all sensors or a subset of two or more sensors is too low/critical.

Further, the method may provide, that at least one sensor is

a camera,

an optical scanning sensor,

a LIDAR system,

a RADAR system,

an imaging sensor generating 2-dimensional or 3-dimensional images of an environment, or

an acoustic sensor.

These sensors may provide imaging data and they may deliver complimentary data. For example, if there are low light, foggy, or rainy conditions, RADAR sensors may still deliver more reliable or higher quality data than a camera with a sensor, which is sensitive in the wavelength range which is visible to a human. The sensors can also be combined with wavelength filters like color filters or the image data may be processed by projecting the data on certain color systems, like, e.g. the RGB color space. For example, selecting image data according to RGB or other color channels or also brightness channels can support the extraction of features from the imaging data.

The invention may further relate to a system with at least one sensor and a neural network which has been trained according to the method described above with at least one data processing unit or process wherein each data processing unit or process is assigned to one, two or more than two sensors and is arranged to identify predefined patterns in the measurement data sets or in features extracted from the measurement data sets delivered by the sensor(s) and to generate an alarm or trigger signal or start or stop a process of a machine only under the condition that a predefined pattern has been identified based on measurement data of at least one sensor or a group of sensors and that the confidence level of the same sensor or group of sensors has been evaluated by the neural network to be above a predefined threshold.

Therein, the data processing unit or procedure for application can according to one implementation be arranged in the system relative to the trained neural network in such a way that the neural network after assignment of an analyzing performance value to the measurement data set(s) either sends or allows to send the measurement data sets to data processing unit or procedure in case the quality of the data is above a predefined confidence level or prevents the forwarding of the measurement data sets in case the quality of the data is below a predefined confidence level. In an alternative implementation, the measurement data sets are in parallel sent to both the trained neural network and the data processing unit/procedure, wherein the neural network assigns a confidence level to the data sets and the data processing unit/procedure performs its function, for example an analysis/ detection /identification process. After that, depending on the assigned confidence level, the results of the further processing are forwarded or not forwarded to a next step in the system in order to decide about generating an alarm or trigger signal and/or blocking a machine which uses the system or is part of the system. The further data processing that is performed by a data processing unit may include any step of extracting features or information from the measurement data set. The data processing may also potentially include a process that is identical or similar to the analyzing procedure that is performed for generating the training data for training the neural network.

The data processing unit or procedure can in some implementations be focused on object detection and may be implemented as a neural network, in particular a convolutional neural network and the feature extraction which is potentially performed before the further data processing is in many cases different from the feature extraction that is performed with the measurement data before forwarding the extracted features to the trained neural network for quality assessment. The feature extraction which is potentially performed before the further data processing may comprise the extraction of localized features like edges, lines or curves or points or regions of high or low contrast or brightness.

The system may be designed as a safety system, which checks the environment or vicinity of the sensors about present items or features, e.g. objects or persons by analyzing the measurement data delivered by one or more sensors by a data processing unit and/or process. If a dangerous situation is detected and an object or person, that is identified as representing a danger approaches a sensor or features in the measurement data are detected that represent a dangerous situation or should trigger a process, an alarm or trigger output is generated by the system as long as the confidence level of the measurement data and/or an overall safety level of the machine or system is satisfying/above a predefined level. As soon as the confidence level of the measurement data is not satisfying/below a predefined level, the system may be blocked or at least, no clearance signal may be generated by the system and the content of the measurement data may not be trusted.

The invention may also be implemented by a machine with a system as described above, wherein the machine is arranged to block, trigger, stop or limit at least one of its activities upon receipt of an alarm or trigger signal. Potential activities therein may be, e.g., a movement of the machine or the application and use of a tool.

In this case, either the system is part of the machine or the machine is a part of the system. In any case, the machine may be a vehicle, for example a caterpillar or a crane or another working machine, or a car for transport of humans and/or material. The system may control the machine in order to avoid dangerous situations and guarantee a defined safety level. For example, the sensors and the neural network may be mounted on the machine or vehicle or in the vicinity of a working location of the vehicle or machine.

The invention will be shown based on exemplary implementations in figures of a drawing and described in detail below.

Therein show:

Figure 1: a diagram illustrating the function of a perception method,

Figure 2: several data sets with varying quality,

Figure 3: a scheme illustrating the training method for the neural network,

Figure 4: the working process of a system with a trained neural network,

Figure 5: an alternative working process of a system with a trained neural network,

Figure 6: a diagram illustrating the scalability of the safety model,

Figure 7: a diagram showing the thresholds of confidence levels,

Figure 8:     examples for different objects that can or cannot be detected and

Figure 9:     a diagram with the classification of detections or non-detections and their contributions to the classification of confidence levels.

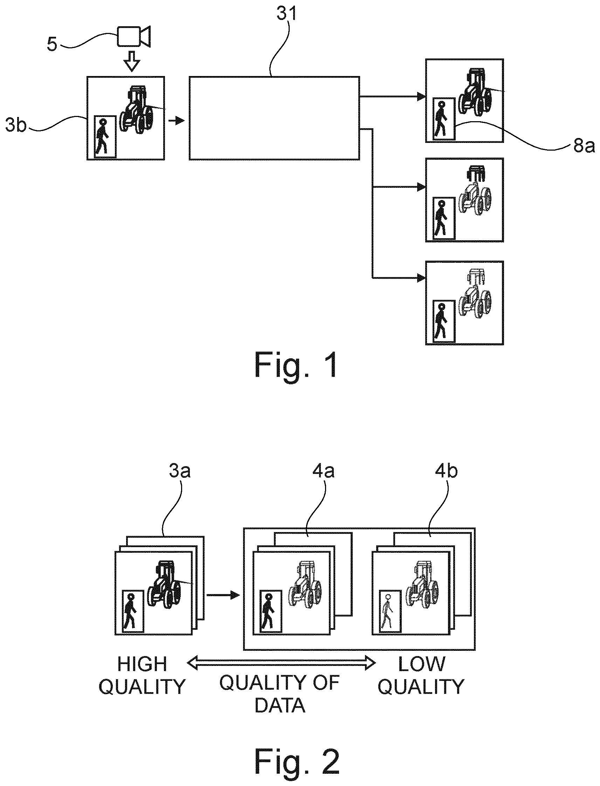

Figure 1 shows an electronic or digital system, which has the function to detect certain objects 8a in a measurement data set. The system comprises a sensor 5 in the form of a camera. The measurement data set has the reference sign 3b. The measurement data set 3b is delivered to a data processing unit in the form of a detection unit or procedure, which is in this application also referred to as data processing unit or procedure 31. The data processing unit or procedure 31 is arranged to detect certain patterns in the measurement data sets. In the case the measurement data sets are imaging data sets captured by a camera, the predefined patterns 8a can be certain distinguishable representations of objects like for example human beings/persons.

On the right side of Figure 1, the reference sign 8a refers to a detected person in a frame in dotted lines.

Further, on the right side of Figure 1, three different measurement data sets in the form of images are shown with different qualities, wherein the upper box shows the best quality, the box in the middle a medium value quality of measured data, i.e. a blurred or foggy image, and the lower box a poor quality. The different quality levels may be caused by different environmental conditions like weather conditions or by a deterioration of the sensor/camera. Hence, the predefined pattern/person is distinguishable in the measurement data set represented in the upper box, while the detection/identification of the person in the middle box is uncertain and the detection in the lower box is impossible or highly uncertain. The problem is, that in many cases the data processing unit or procedure 31 does not provide information about the certainty of its detection or analysis results. Various efforts may be made to improve the results of, for example, a detection mechanism, but even with improved results, a user of a detection system will not have more certainty about the reliability of the results, even if they become better from an objective perspective.

If this problem shall be solved, e.g., by a system with a trained algorithm or neural network, a huge quantity of training data is needed. These data should preferably comprise data of varying quality because the system needs to be trained with data of different levels of quality.

Figure 2 shows as an example including three groups of data sets: on the left side, one or more original measurement data sets 3a and on the right side in the box which is defined by a dotted line, transformed data sets 4a, 4b of a lower quality. The original measurement data sets can be generated by measurements taken by a sensor with optimal measurement conditions. The original measurement data sets may also be generated artificially by data processing or taken from a data base. The transformed data sets are generated based on an original measurement data set with a good quality by various transformation activities, which partially change or eliminate the data of the original measurement data set and conserve only a part of the original data.

By the transformation, various effects of data changes can be imitated which may occur in a similar way in the real world with the measurement data, like blurring of a picture, low light conditions, glaring of light, fog, rain or a raindrop on the lens of a camera. Similar transformations may be performed with other kinds of measurement data like, e.g. acoustic data. These transformations may include filtering of frequencies or frequency bands or adding noise, adding background sounds or distorting sounds.

The advantage of the production of transformed data sets is that a high number of them may be produced automatically in a reproducible or controllable way. This is important because for the training of a neural network, extremely high numbers of training data are desirable.

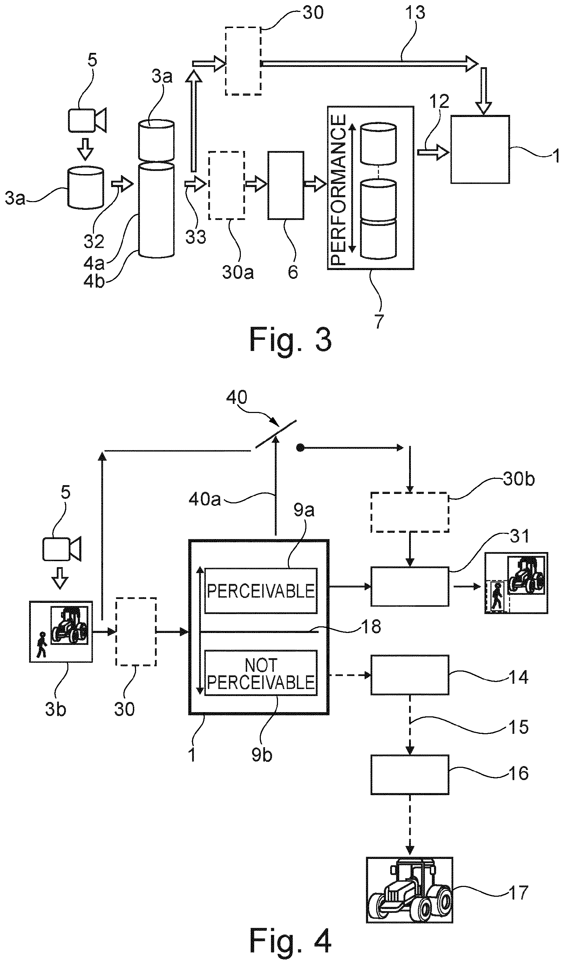

In Figure 3, the training process of a safety model, also referred to as neural network 1, is shown. The neural network may be designed as a physical network, but also as an algorithm, which is implemented as a software. According to Figure 3, the sensor 5 in the form of a camera takes pictures of the environment, for example, pictures in the wavelength spectrum, which is visible for a human eye. These pictures, which serve as a basis for training data, are referred to as original measurement data set 3a. The original measurement data set(s) is (are) sent to a processing unit which transforms and changes in step 32 the original measurement data set(s) and generates transformed data sets. The original measured data set 3a and transformed data sets 4a, 4b are sent in step 33 to the analyzing procedure or unit 6 which may be arranged as a trained neural network and/or as a software process or algorithm running on a computing unit or microprocessor, which can detect and /or identify patterns in the data set(s). For this purpose, the analyzing unit or procedure 6 may perform a similar or the same function as the data processing unit 31, but in some cases, the functions of the analyzing unit 6 and the function of the processing unit 31 may also be different. Further, analyzing unit or procedure 6 may comprise a unit 30a for feature extraction or may receive extracted data from a feature extraction unit 30a, wich may be positioned before the analyzing unit 6. The processing unit 31 and the potential feature extraction 30b that may be combined with it is described in detail with reference to Fig. 4. The processing unit 31 is used for the further processing of measurement data when the trained neural network 1 is in use.

Both analyzing units 6 and 31 may be designed as convolutional neural networks, which may rely on extracted features or perform a feature extraction function as well as, subsequently, a classification function of detected patterns. The features which are extracted and provided to the analyzing unit 6 may be different from the features that are extracted and provided to the analyzing unit 31 as discussed further below.

In Fig. 3, an optional feature extraction unit 30a is shown before the analyzing procedure 6. This unit30a comprises the extraction of features from the original measurement data set as well as the transformed data sets. The feature extraction may comprise the reduction of data to some aspects and hence, the reduction of data which have to be analysed in the analyzing procedure. The feature extraction unit 30a may extract global features like an overall contrast, sharpness or brightness of an image or an overall blurred effect.

The features which are extracted by the extraction unit 30 and provided directly to the neural network 1 for training purposes may in some cases be the same or similar to or different from the features that are extracted by the extraction unit or process 30a and further used for the determination of an analyzing performance.

In the case that the original measurement data are image data, the features extracted by the feature extraction unit 30 may be global features like an overall or average contrast, brightness or sharpness of an image.

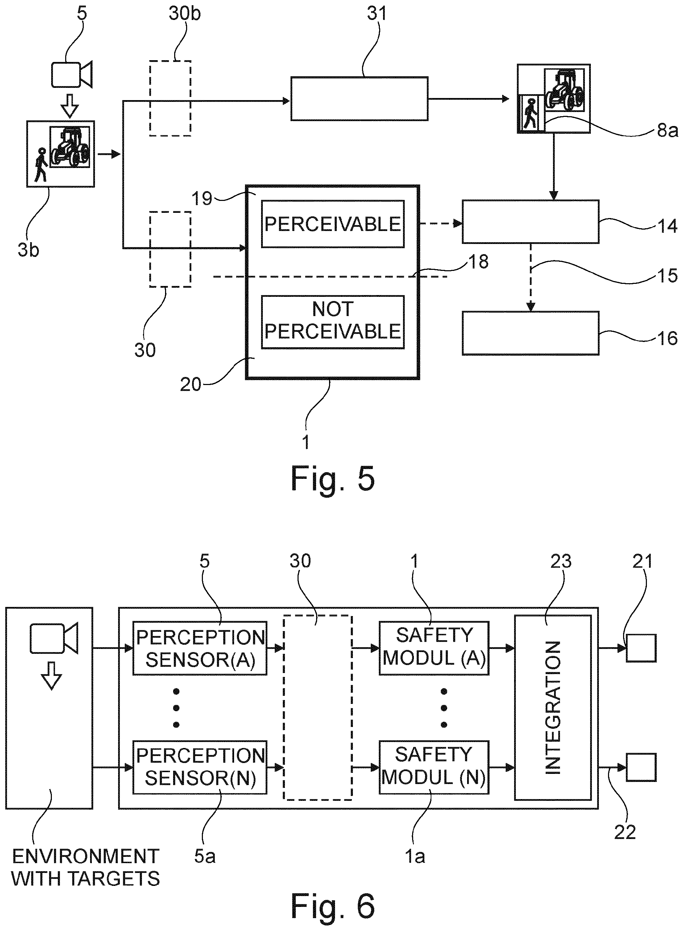

The features extracted by the feature extraction unit 30 and forwarded directly to the neural network 1 for the training purposes may be the same features that are extracted from the measurement data during use of the neural network and that are during measurement by the sensors and processing of the measurement data provided to the neural network for the quality assessment as shown in figs 4 and 5 and described further below.

In the case of sound measurements, features like certain frequency bands or time windows of an acoustic event may be extracted.

If the optional step 30a in Fig. 3 is not implemented, the data sets 3a, 4a, 4b are sent directly to the analyzing unit/procedure 6. The step of feature extraction 30a and 30 are not obligatory, however, it serves to focus the subsequent data processing and analyzing steps to certain aspects and to reduce the need of resources.

The analyzing procedure or unit 6 analyses the data sets 3a, 4a, 4b or optionally, the extracted features and performs its analyzing/detection function. For the different transformed data sets with different quality, the performance of the analyzing procedure or unit 6 may be different. Because the transformed data sets are derived from the original measurement data set, the performance of the analyzing/detection function may be compared for the different data sets and analyzing performance values corresponding to quality values may be assigned, wherein the analyzing performance value of an original measurement data set may serve as a reference.

One concrete example of an implementation of the determination of performance values may be described as follows: If in the original measurement data set, measured under intended triggering conditions of data processing unit (31), a certain number x of patterns or objects, e.g., persons in an image or edges of objects are detected or identified, it can be assumed that a performance value of detecting x objects or x edges is a performance value of 100%. If in a transformed data set only a certain share, e.g., 50% of the x patterns/objects/edges can be identified, the performance value of the analyzing procedure or unit 6 for this transformed data set may be considered as 50%, in any account less than 100%.

Another example of an implementation of the determination of performance values may be the measurement of the average contrast of an image taking the average contrast of the original measurement image data as a reference, e.g., 100% and measure the contrast of other image data sets as a share of the reference contrast.

The analyzing performance may be measured by assigning to each data set a number of identified patterns/objects or a share of 100% performance. The analyzing performance values assigned to the data are represented in Fig. 3 by the reference sign 7. The analyzing performance values serve as training data and are sent directly to the neural network 1 that shall be trained, in a step indicated by the arrow 12. At the same time, the corresponding data sets to which the individual analyzing performance values refer, or features extracted from these data sets by the feature extracting unit 30 are also sent to the neural network 1 in a step indicated by the arrow 13. Hence, a large number of data sets along with a performance value for each single data set can be fed into the neutral network 1 as training data. The neural network 1 is trained to assign to any future measurement data set, which is provided by a measurement by a sensor, an analyzing performance value for a further data processing, for example a detection/identification or other process. The training of the neural network may in some cases include back-propagation methods. The analyzing performance value reflects a quality or reliability of the measurement data provided by the sensor or the sensors, which can be considered as a condition for the further processing of the measured data.

Figure 4 shows the structure of a system with a sensor, a processing of sensor measurement data and an appropriately trained neural network 1 for detecting the quality or confidence level of measurement data.

The system comprises one or more sensors like a camera 5 or an optical scanning sensor. More than one camera or scanning sensor may also be provided to offer more information, e.g. in additional wavelength ranges, for example infrared, which enable the system to perceive details from the environment at low light conditions. Two or more optical cameras may also be provided with a distance between the cameras to provide different angles of view and allow for a sensor fusion and calculation of 3d-images. The measurement data sets 3b or fused data delivered by the sensors are sent to a trained network 1, which assigns a quality value or analyzing performance value 7 (conf. Fig. 3) or confidence level to each data set.

Optionally, a feature extraction unit or step 30 may be provided. In this case, features are extracted from the measurement data and the extracted features are sent to the trained neural network 1. The feature extraction 30 and the analysis may be combined in one neural network 1, e.g. if this is designed as a convolutional neural network.

Convolutional neural networks are particularly appropriate or the extraction of features from graphical data sets, like, e.g. photos.

Convolutional Neural Networks comprise convolutional layers to filter inputs for useful information. A convolution operation is combining input data (feature map) with a convolution kernel (filter) to form a transformed feature map. The filters in the convolutional layers are modified based on learned parameters to extract the most useful information for a specific task. A CNN may, e.g. filter information about the shape of an object in an image for the purpose of object recognition but could as well extract other features depending on the task.

Convolutional Neural Networks may be applied with advantage in image recognition or image classification, as well as speech recognition, or natural language processing.

Convolutional networks may comprise an input layer, an output layer, and one or more hidden layers. The layers of a convolutional network are arranged in three dimensions which allows for transforming an input volume in three dimensions to an output volume. The hidden layers are a combination of convolution layers, pooling layers, normalization layers, and fully connected layers. CNNs use multiple convolutional layers to filter input volumes to greater levels of abstraction.

Based on the quality value or confidence level of each measurement data set or the extracted features, the neural network 1 may send the measurement data sets to the data processing unit 31 or not. The unit 31 may serve as an object detection unit which detects predefined or not predefined objects in the measurement data sets and triggers actions under certain conditions, which depend on the detected objects and it may have a similar structure as the network 1 or a different structure. The data processing unit 31 may also comprise a convolutional neural network with a structure similar to that of the network 1. If the neural network 1 decides to send a data set to the data processing unit, 31, for example, an object detection unit, it may be considered certain that the data processing unit 31 can generate a good detection/identification result based on the data set because during training of the neural network 1, it has been trained to recognize the quality and reliability of data delivered by a sensor which may be of the same kind or similar as the camera 5. Further, the analyzing procedure 6 which has been used for the analysis of original measurement data sets and transformed data sets during the training phase of the neural network may be chosen to be of the same or a similar structure to the processing which is performed by the processing unit 31. However, analyzing procedure 6 may use different extracted features than processing unit 31. In a data set with a high performance value, an object 8a may reliably be detected by the subsequent data processing step 31 as a predefined pattern.

In Fig. 4, inside the box representing the trained neural network 1, two sections 9a and 9b are shown which represent data sets of different analyzing performance value or quality. The potential performance values of the measurement data 3b after feature extraction by the unit 30 are classified as high quality values 9a or low quality values 9b depending on their position on the vertical quality axis of the diagram shown in Fig. 4 inside the box 1 and if they are below or above a defined quality threshold 18.

Unreliable detection results with a performance value which is below the threshold 18 may also be registered and forwarded to a unit 14. At the same time, the neural network 1 may prevent the forwarding of these detection results/measurement data to the data processing unit 31 for further use. This is shown in Figure 4 by the symbolic switch 40 which is activated by the neural network through an activating mechanism 40a either to forward the detection results to the unit 31 or to prevent the transmission of the detection results to the unit 31. The unit 14 may collect unreliable performance value results and if a certain absolute number is reached or a certain number or share of the detection results/measurement data sets is considered as unreliable or after a certain number of delivered measurement data sets, still no or too few reliable data sets have been registered, an alarm or trigger signal 15 may be generated which may cause an alarm unit 16 to block a machine 17. Further, the machine 17 may also be blocked as soon as a reliable measurement data set has been provided to the data processing unit 31 and an object 8a that may be dangerous for the operation of the machine 17 has been detected and/or identified by the unit 31. In this case, an alarm or trigger signal is generated by the data processing unit 31 and sent to the alarm unit 16. Next to the processing unit 31, the feature extraction unit 30 is positioned to extract features and to provide them for further analysis to the unit 31.

Figure 5 shows an alternative structure of a system with an appropriately trained neural network 1.

As according to the system shown in Figure 4, a sensor/camera 5 provides measurement data sets 3b, which are, in one implementation, forwarded directly to the trained neural network 1 and in parallel to the data processing unit 31, which may again be an object detection unit.

In one possible implementation, the measurement data sets 3b may first be sent to a feature extraction unit 30 represented by a dotted line and only the extracted features are forwarded to the trained neural network 1. Also in this implementation, it may be provided that the feature extraction 30 and the analysis are combined in one neural network, e.g. a convolutional neural network.

At the same time, the measurement data sets 3b may be sent to the data processing unit 31, for example for an object detection. Before reaching the processing unit 31, the measurement data may be subject to a feature extraction by the feature extraction unit 30b. In this case, only features extracted by the feature extraction unit 30b are further processed by the data processing 31.

The feature extraction unit 30 may be different from the feature extraction unit 30b since the tasks of neural network 1 and the data processing unit 31 are different. The feature extraction unit 30 may for example extract global features from image data.

The data processing unit 31 performs its detection/identification function with a good or poor result, depending on the quality of the measurement data set. At the same time, the trained neural network 1, which may be designed as a convolutional neural network, assigns to each measurement data set or to the extracted features a performance value which indicates, if the performance value or confidence level of each individual measurement data set is sufficient and lies above a predefined threshold 18 and hence, if a processing result, e.g., a detection /identification of an object for each individual measurement data set by the data processing unit 31 is reliable. The threshold 18 shown in the box 1 in Fig. 5 therefore divides the performance range or the range of possible confidence levels into two classes: the acceptable performance values/confidence levels 19 and inacceptable performance values/confidence levels 20.

The feature extraction 30 may in one potential implementation be included in the trained neural network 1, in particular if this is designed as a convolutional neural network.

The processing results, e.g., detection/identification results of the data processing unit 31 and the corresponding assigned performance values/confidence levels 19, 20 are then combined in unit 14. On the right side of Fig. 5 as well as on the right side of Fig. 4, the detected object 8a, a person, is surrounded by box, which shows that the object/person has been identified by the processing unit 31.

Only processing/detection/identification results of measurement data sets with a sufficient confidence level are considered for generating an alarm or trigger signal 15 which is sent to a unit 16 which acts as a control unit or blocking unit for a machine which is not shown in Figure 5. Another trigger may be generated if one or more confidence levels of measurement data sets from one or more sensors are below a defined threshold, because in this case, any measurement may be unreliable and the status and control of the system is uncertain.

Figure 6 shows a diagram, which shall illustrate how several safety models in the form of neural networks 1, 1a, which are assigned to different sensors or groups of sensors 5, 5a, may be implemented as trained neural networks 1, 1a and can be combined to an integrated safety model for a system. The single neural networks 1, 1a, will assign individual confidence values or confidence classes to each measurement data set of one or more sensors. If a sufficient number of sensors at a point of time are forwarding measurement data sets of a sufficiently high confidence level, those measurement data sets may be fused in an integration unit 23 to generate fused sensor data 21 which may be further processed in a data processing unit 31 (conf. Fig. 5) to generate a comfortable and enriched detection/identification result. At the same time, an overall confidence level 22 of the measurement data for the whole system may be generated by combining individual confidence values of sensors or measurement data to confirm the reliability of the detection/identification result.

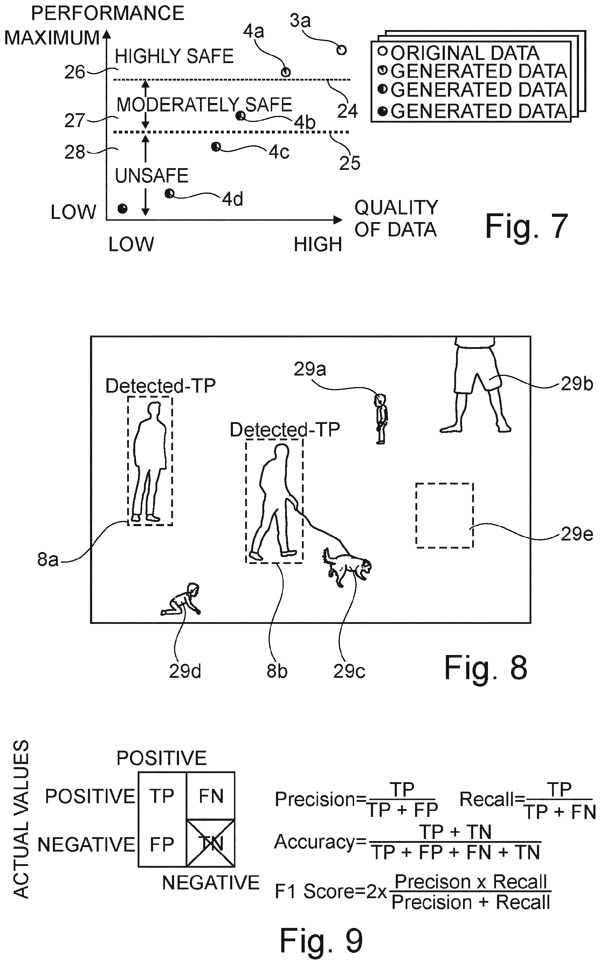

Figure 7 is showing a diagram with different data sets 3a, 4a, 4b, 4c, 4d, of different quality. The vertical axis of the diagram is related to the performance value which is assigned to the data sets, while the horizontal axis is related to the quality of data which is influenced in the training phase by the applied transformation and in the working phase by the environmental conditions and intrinsic problems of the sensors or other elements of the system. (Generally, low data quality leads to a low performance value but the two values are not necessarily proportional, since the analyzing procedure in some ranges of low quality may still be able to compensate for deficiencies of quality.)

3a refers to the original measurement data set with the highest quality of data captured under optimal conditions. From this measurement data set, the analyzing procedure/unit 6 (conf. Fig. 3) can detect the maximum number of objects or patterns and hence, the performance value of the analyzing procedure/detection/identification function for this data set is at its maximum.

The different data sets are divided in classes according to their assigned performance value or performance value classes. The range of performance values is subdivided by two threshold values 24, 25 into three performance value classes or confidence level classes: Highly safe 26, moderately safe 27 and unsafe 28.

The measurement data sets belonging to classes 27, 28 may in one potential implementation not be used for the data processing 31 /detection/identification of objects (conf. Fig. 5) or respective detection/identification results will not be confirmed. In another implementation with a lower safety level, measurement data sets belonging to the classes 26 and 27 may be used for the data processing 31 /detection/identification of objects or respective detection/identification results will be confirmed.

Figure 8 is showing a potential measurement data set with a number of detected objects 8a, 8b, and other items 29a, 29b, 29c, 29d, 29e.

The objects 8a, 8b correspond to predefined patterns which can be detected by an analyzing unit or procedure 6. Such an analyzing unit or procedure 6 according for each of the implementation examples shown in Figures 1 to 7 may, for example, be realized as a trained neural network. This neural network may also be combined with the neural network 1, which performs the function of a performance value assignment or one single neural network may perform both functions of assigning a performance value and analyzing data sets in the training phase. The neural network for detecting/identifying objects has to be trained appropriately.

The items 29a, 29b, 29c, 29d, 29e will in most cases not or not correctly be detected and/or identified by the analyzing unit or procedure 6 for different reasons: The image of item 29a is too blurred and therefore cannot be identified as the image of a person. Image /item 29b shows just a part or section of a perceivable object and therefore is not identified. 29c is the image of an item which is not expected and possibly does not cause any danger and therefore is not identified, because it is not in a target group of identifiable objects. Image 29d is too small and therefore cannot be detected and/or identified.

Item 29e is a non- item, which means that the measurement data set has the property that this place in the data set does not show anything.

Detecting this property in the measurement data set would mean to confirm a "true negative" (TN), which is not a helpful analysis result of the data set, because it means that at a specific place of the data set, no object is detected and in reality, there is no object.

In one implementation of the invention, the training of the neural network 1, the trained network, the system and the method for operating the system refer to a detection by the neural network of "true positives" (TP) only. That means, the number of positively detected objects in a data set is counted and compared for the evaluation of a performance value to the "true" objects which are present and can be detected in the perfect original measurement data set by the analyzing unit/procedure. The share of true positives compared to the total detectable number of objects in percent may be used as a performance value.

In another implementation of the invention, as shown in Figure 9, the training of the neural network 1, the trained network 1, the system and the method for operating the system may, in contrast, take into consideration a detection of true positives (TP), "false negatives" (FN), which means that an object, which is at a certain place of the data set, is not detected and "false positives" (FP) which means, that objects are detected at places of the data set, where in reality there is no object.

If TPs, FNs and FPs are taken into consideration for the training of the neural network and the assignment of a performance value to the data sets, a performance value F may be calculated as proportional to

$$F = \text{Performance} = 2 \times PxR/(P+R)$$

Wherein

P=Precision= TP/(TP+FP) and

R=Recall= TP/(TP+FN). Therein, in the formulas TP means the number of detected True Positives, FP means the number of False Positives, FN means the number of False Negatives. These numbers are, in the training phase, determined by comparing the analyzing results of the transformed data sets with the analyzing results of an original measurement data set.

Another possible and applicable metric for a performance value would be AP, also known as "average precision", which can be calculated as

$$AP = \int_0^1 P(R)\, dR$$

Wherein P and R are defined as above.

The invention as described above, allows for a very resource-efficient control of a system and a machine based on measurements and respective measurement data sets with a selective consideration of the reliability and confidence level of the measured data and a safety level of the system.

**Claims**

1. Method for training a neural network (1) to assess the quality of measurement data (3b) delivered by a sensor (5), wherein the method comprises the following steps:

   providing an original measurement data set (3a),
   analyzing the original measurement data set or features extracted from the original measurement data set by an analyzing unit and/or an analyzing procedure (6) to generate an analyzing performance,

   - providing one or more transformed data sets by providing additional measurement data sets of different quality levels, that are used as transformed data sets (4a, 4b, 4c, 4d, 4e) and/or
   - transforming the original measurement data set and/or additional measurement data sets into one or more transformed data sets (4a, 4b, 4c, 4d, 4e) of different quality levels,

   analyzing at least one of the transformed data sets and/or features extracted from each transformed data set by the analyzing unit and/or the analyzing procedure (6) to generate an analyzing performance and comparing the analyzing performance of the transformed data sets and/or features extracted from each transformed data sets with the analyzing performance of the original measurement data set or the analyzing performance of the features extracted from the original measurement data set to assign, based on the results of the comparison, analyzing performance values (7) to the transformed data sets,

> - training the neural network by feeding transformed data sets and/or the features extracted from each transformed data sets by an extraction unit or extraction process (30) on one hand, and for each transformed data set the assigned analyzing performance value on the other hand into the neural network.

2. Method according to claim 1 **characterized in that** the transformation of the original measurement data set (3a) into transformed data sets (4a, 4b, 4c, 4d, 4e) comprises one or more of

> adding noise,
> filtering data,
> blurring data
> masking
> partially randomizing data
> distorting data, and/or wherein the transformed data sets are one or more of
> resized,
> normalized and
> augmented.

3. Method according to one of claims 1 or 2, **characterized in that** analyzing a data set or features extracted from a data set comprises determining the similarity of the data set or features extracted from the data set with the original measurement data set or features extracted from the original measurement data set, in particular identifying predefined patterns (8a, 8b) in the data set or in features extracted from the data set and comparing them with predefined patterns identified in the original measurement data set or in the features extracted from the original measurement data set.

4. Method according to claim 1, 2 or 3, **characterized in that** the analyzing performance value (7) of a transformed data set (4a, 4b, 4c, 4d, 4e) is measured as a similarity of patterns (8a, 8b) that are identified by the analyzing unit or the analyzing procedure (6) in the transformed data set or in the features extracted from each transformed data set on one hand and patterns identified in the original measurement data set or in features extracted from the original measurement data set on the other hand, or that the analyzing performance value (7) of a transformed data set (4a, 4b, 4c, 4d, 4e) is measured as a number of predefined patterns (8a, 8b) that are identified by the analyzing unit or the analyzing procedure (6) in the transformed data set or in the features extracted from each transformed data set as a share of the predefined patterns that are identified by the analyzing unit or the analyzing procedure (6) in the original measurement data set (3a) or in the features extracted from the original measurement data set.

5. Method according to one of claims 1 to 4, **characterized in that** a subset of the original measurement data set (3a) is selected for the training of the neural network (1) or a subset is given a higher weight than the rest of the original measurement data set for the training of the neural network.

6. Data storage device comprising a plurality of stored instructions that, when executed on a processor circuitry of a computer controlled device, cause the computer controlled device to perform a method according to one of claims 1 to 5.

7. Neural network (1), in particular a convolutional neural network, which has been trained according to one of claims 1 to 5.

8. Method for operating a system with at least one sensor (5) and a neural network (1) which has been trained by a process according to one of claims 1 to 5,

> wherein the or each sensor takes measurements to generate measurement data (3b),
> the measurement data of the or each sensor are sent to the neural network which assigns an analyzing performance value (7) to the measurement data and wherein
> for the measurement data of each sensor the assigned analyzing performance value is compared to one or more predefined performance value classes (9a, 9b) and, based on the comparison, a sensor confidence level is assigned to each sensor and/or to a group of sensors.

9. Method according to claim 8, **characterized in that** the measurement data (3b) that have been generated by measurements taken by the sensor (5) or sensors, apart from the assignment of a sensor confidence level, are further processed by a data processing (31) which is identical or not identical to the analyzing procedure (6), that was applied during the training of the neural network (1) for the transformed data sets and the original measurement data set and/or features extracted from the data sets.

**10.** Method according to claim 8 or 9, **characterized in that** a subset of the measurement data set (3b) is selected or a subset is given a higher weight than the rest of the measurement data set for the assignment of a safety value by the neural network (1).

**11.** Method according to claim 8, 9 or 10 **characterized in that** the measurement data (3b) of at least one sensor (5) is only provided for further use or data processing (31), if the sensor confidence level of the sensor is above a predefined safety threshold (24, 25).

**12.** Method according to claim 11, **characterized in that**, if the sensor (5) confidence level of one sensor is below a predefined threshold (24, 25), the measurement data (3b) of the sensor are replaced by measurement data of at least one other, redundant sensor of the same kind or of a different kind.

**13.** Method according to claim 8, 9, 10, 11 or 12, **characterized in that** assigned sensor confidence levels of two or more sensors (5) are combined to generate a system safety value and/or that at least one sensor (5) is

> a camera,
> an optical scanning sensor,
> a LIDAR system,
> a RADAR system,
> an imaging sensor generating 2-dimensional or 3-dimensional images of an environment, or
> an acoustic sensor.

**14.** System with at least one sensor (5) and a neural network (1) which has been trained according to the method claimed in one of claims 1 to 5 and with at least one data processing unit or process (31) wherein each data processing unit or process (31) is assigned to one, two or more than two sensors and is arranged to identify predefined patterns (8a, 8b) in the measurement data sets (3b) or in features extracted from the measurement data sets delivered by the sensor and to generate an alarm or trigger signal or start or stop a process of a machine only under the condition that a predefined pattern has been identified based on measurement data of at least one sensor or a group of sensors and that the confidence level of the same sensor or group of sensors has been evaluated by the neural network (1) to be above a predefined threshold (24, 25).

**15.** Machine with a system according to claim 14, wherein the machine (17) is arranged to block, trigger, stop or limit at least one of its activities upon receipt of an alarm signal.

Fig. 1

HIGH
QUALITY

QUALITY OF
DATA

LOW
QUALITY

Fig. 2

Fig. 3

Fig. 4

Fig. 5

Fig. 6

Fig. 7

Fig. 8

$$Precision = \frac{TP}{TP + FP} \qquad Recall = \frac{TP}{TP + FN}$$

$$Accuracy = \frac{TP + TN}{TP + FP + FN + TN}$$

$$F1\ Score = 2 \times \frac{Precison \times Recall}{Precision + Recall}$$

Fig. 9

| | Europäisches Patentamt European Patent Office Office européen des brevets | **EUROPEAN SEARCH REPORT** | **Application Number** EP 23 20 9886 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/117787 A1 (STAL RAINER [DE] ET AL) 22 April 2021 (2021-04-22) * paragraphs [0002] - [0104] * ----- | 1-15 | INV. G06N3/08 G01S17/931 |
| A | WO 2022/180227 A1 (ZEISS CARL MEDITEC INC [US]; ZEISS CARL MEDITEC AG [DE]) 1 September 2022 (2022-09-01) * paragraphs [0002] - [0116] * ----- | 1-15 | |
| A | US 2022/114805 A1 (JARQUIN ARROYO JULIO FERNANDO [DE] ET AL) 14 April 2022 (2022-04-14) * paragraphs [0001] - [0100] * ----- | 1-15 | |

**TECHNICAL FIELDS SEARCHED (IPC)**

G01S
G06N

The present search report has been drawn up for all claims

| Place of search | Date of completion of the search | Examiner |
|---|---|---|
| The Hague | 4 June 2024 | Moran, Matthew |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 20 9886

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2024

| Patent document cited in search report | Publication date | Patent family member(s) | Publication date |
|---|---|---|---|
| US 2021117787 A1 | 22-04-2021 | CN 112668602 A<br>DE 102019215902 A1<br>US 2021117787 A1 | 16-04-2021<br>20-05-2021<br>22-04-2021 |
| WO 2022180227 A1 | 01-09-2022 | US 2024127446 A1<br>WO 2022180227 A1 | 18-04-2024<br>01-09-2022 |
| US 2022114805 A1 | 14-04-2022 | DE 102022131673 A1<br>US 2022114805 A1 | 22-06-2023<br>14-04-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220114805 A1